# EUROPÄISCHE PATENTANMELDUNG

(11) **EP 4 838 747 A1**
(43) Veröffentlichungstag der Anmeldung: **11.11.2026**
(21) Anmeldenummer: 25174410.8
(22) Anmeldetag: 06.05.2025
(51) Int. Cl.: H02J 7/00

(54) **LADEVORRICHTUNG FÜR AKKUMULATOREN**

(71) Anmelder: Hilti Aktiengesellschaft, 9494 Schaan (LI)
(72) Erfinder: Seltmann, Daniel, 86842 Türkheim (DE)
(74) Vertreter: Hilti Aktiengesellschaft Corporate Intellectual Property

(57) **Zusammenfassung**

Ladeverfahren von Akkumulators mit den Verfahrensschritte:
- Verbinden der Akkumulatoren mit der Ladevorrichtung;
- Empfangen eines ersten und zweiten Ladungswertes;
- Empfangen eines ersten und zweiten Temperaturwertes;
- Ermitteln einer ersten Zeitdauer zum Laden des ersten Akkumulators von dem ersten zu einem dritten Ladungswert;
- Ermitteln einer zweiten Zeitdauer zum Laden des zweiten Akkumulators von dem zweiten zu einem vierten Ladungswert;
- Ermitteln einer dritten Zeitdauer zum Kühlen des ersten Akkumulators von dem ersten auf einen dritten Temperaturwert;
- Ermitteln einer vierten Zeitdauer zum Kühlen des zweiten Akkumulators von dem ersten auf einen vierten Temperaturwert;
- Laden des ersten Akkumulators mit einer ersten Ladeleistung sowie Kühlen des ersten Akkumulators mit einer ersten Kühlleistung, wenn die erste größer ist als die dritte Zeitdauer; und/oder
- Laden des zweiten Akkumulators mit einer zweiten Ladeleistung sowie Kühlen des zweiten Akkumulators mit einer zweiten Kühlleistung, wenn die zweite größer ist als die vierte Zeitdauer.

## Beschreibung

### Ladevorrichtung für Akkumulatoren

Die vorliegende Erfindung betrifft ein Verfahren zum Laden wenigstens eines ersten und zweiten Akkumulators, insbesondere als Energiespeichereinheit für eine Werkzeugmaschine, durch eine Ladevorrichtung enthaltend eine Steuerungseinheit, eine Kommunikationseinheit zum Empfangen von Signalen von dem ersten und zweiten Akkumulator, eine Speichereinheit und eine Kühleinrichtung zum wahlweisen Kühlen des wenigstens ersten und/oder zweiten Akkumulators mit variablen Kühlleistungen, wobei jeder Akkumulator wenigstens einen Temperatursensor zum Erfassen von Temperaturwerten sowie wenigstens eine Einrichtung zum Ermitteln von Ladungswerten enthält.

Des Weiteren betrifft die vorliegende Erfindung eine Ladevorrichtung zur Durchführung des Verfahrens.

Akkumulatoren mit einzelnen Akku-Zellen, die mit Hilfe eines sogenannten Zellträgers sicher innerhalb eines Akku-Gehäuses gehalten werden, sind gemäß dem Stand der Technik als wiederlösbare Energieversorgung für eine elektrische Werkzeugmaschine weitestgehend gekannt. Die Akku-Zellen dienen zum Aufnehmen, Speichern und Abgeben elektrischer Energie.

Zum Laden von Akkumulatoren mit elektrischer Energie dienen Ladevorrichtungen (auch Lader genannt). Neben den Komponenten zum Laden der Akkumulatoren mit elektrischer Energie verfügen die Ladevorrichtungen für gewöhnlich noch über eine Kühleinrichtung in Form eines Lüfters zum Kühlen der mit der Ladevorrichtung verbundenen Akkumulatoren.

Nachdem ein oder auch mehrere Akkumulatoren zum Laden mit einer Ladevorrichtung verbunden sind, beginnt die Kühleinrichtung automatisch bzw. unabhängig von tatsächlich ermittelten Temperaturwerten den oder die Akkumulatoren zu kühlen. Nach dem Kühlprozess oder auch bereits während des Kühlprozesses erfolgt das eigentliche Laden der Akkumulatoren mit elektrischer Energie.

Dadurch, dass die zum Stand der Technik gehörenden Ladevorrichtungen die Akkumulatoren zunächst kühlen bevor der tatsächliche Ladevorgang gestartet wird, verlängert sich der Ladevorgang von Akkumulatoren.

In dem Fall, dass schon während des Kühlvorgangs die Akkumulatoren geladen werden, wird ein Teil der zur Verfügung stehenden elektrischen Energie für die Kühleinrichtung verwendet. Für den tatsächlichen Ladevorgang steht dann nur noch ein Teil bzw. nicht mehr die gesamte elektrische Energie zur Verfügung. Auch hierdurch verlängert sich der Ladevorgang von Akkumulatoren.

Es ist damit Aufgabe der vorliegenden Erfindung die vorstehend beschriebenen Probleme zu lösen.

Die Aufgabe wird gelöst durch den Gegenstand des unabhängigen Patentanspruchs 1 und 5.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch ein Verfahren zum Laden wenigstens eines ersten und zweiten Akkumulators, insbesondere als Energiespeichereinheit für eine Werkzeugmaschine, durch eine Ladevorrichtung enthaltend eine Steuerungseinheit, eine Kommunikationseinheit zum Empfangen von Signalen von dem ersten und zweiten Akkumulator, eine Speichereinheit und eine Kühleinrichtung zum wahlweisen Kühlen des wenigstens ersten und/oder zweiten Akkumulators mit variablen Kühlleistungen, wobei jeder Akkumulator wenigstens einen Temperatursensor zum Erfassen von Temperaturwerten sowie wenigstens eine Einrichtung zum Ermitteln von Ladungswerten enthält.

Erfindungsgemäß sind die folgenden Verfahrensschritte vorgesehen,
- Verbinden des wenigstens ersten und zweiten Akkumulators mit der Ladevorrichtung;
- Senden eines ersten Ladungswertes und eines ersten Temperaturwertes von dem wenigstens ersten Akkumulator an die Ladevorrichtung;
- Senden eines zweiten Ladungswertes und eines zweiten Temperaturwertes von dem wenigstens zweiten Akkumulator an die Ladevorrichtung; und
- Kühlen des ersten Akkumulators mit einer ersten Kühlleistung und/oder Laden des zweiten Akkumulators mit einer ersten Ladeleistung, wenn der erste Temperaturwert höher ist als der zweite Temperaturwert.

Entsprechend einer vorteilhaften Ausführungsform enthält das Verfahren den Verfahrensschritt:
- Laden des ersten Akkumulators mit einer zweiten Ladeleistung, wenn wenigstens ein zweiter von dem ersten Akkumulator an die Ladevorrichtung gesendeter Temperaturwert einem vorbestimmten Schwellwert entspricht, wobei die zweite Ladeleistung geringer ist als die erste Ladeleistung.

Gemäß einer weiteren vorteilhaften Ausführungsform enthält das Verfahren den Verfahrensschritt:
- Kühlen des zweiten Akkumulators mit einer zweiten Kühlleistung, wenn wenigstens ein zweiter von dem zweiten Akkumulator an die Ladevorrichtung gesendeter Ladungswert einem vorbestimmten Schwellwert entspricht, wobei die zweite Kühlleistung geringer ist als die erste Kühlleistung.

Entsprechend einer weiteren vorteilhaften Ausführungsform enthält das Verfahren den Verfahrensschritt:
- Kühlen des ersten Akkumulators mit einer ersten Kühlleistung und/oder Laden des zweiten Akkumulators mit einer ersten Ladeleistung, wenn der erste Temperaturwert wenigstens einen vorbestimmten Wert höher ist als der zweite Temperaturwert.

Gemäß einer weiteren vorteilhaften Ausführungsform kann es möglich sein, dass die erste Kühlleistung einem Faktor der zweiten Kühlleistung und/oder die erste Ladeleistung einem Faktor der zweiten Ladeleistung entspricht.

Entsprechend einer alternativen und vorteilhaften Ausführungsform kann es möglich sein, dass die erste und zweite Kühlleistung in Summe im Wesentlichen einer Gesamtkühlleistung der Kühleinrichtung entspricht.

Gemäß einer weiteren vorteilhaften Ausführungsform kann es möglich sein, dass die erste und zweite Ladeleistung in Summe im Wesentlichen einer Gesamtladeleistung der Ladevorrichtung entspricht.

Entsprechend einer weiteren vorteilhaften Ausführungsform enthält das Verfahren die Verfahrensschritte:
- Ermitteln wenigstens eines Umgebungstemperaturwertes mittels eines Temperatursensors zum Erfassen von Umgebungstemperaturwerten,
- Einstellen einer Kühlleistung der Kühleinrichtung zum Kühlen des wenigstens ersten und/oder zweiten Akkumulators in Abhängigkeit eines von dem Temperatursensor erfassten Umgebungstemperaturwerts; und/oder
- Einstellen einer Ladeleistung der Ladevorrichtung zum Laden des wenigstens ersten und/oder zweiten Akkumulators in Abhängigkeit eines von dem Temperatursensor erfassten Umgebungstemperaturwerts.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Schnittansicht durch eine erfindungsgemäße Ladevorrichtung gemäß einer ersten beispielhaften Ausführungsform, und
- Figur 2: eine Schnittansicht durch eine erfindungsgemäße Ladevorrichtung gemäß einer zweiten beispielhaften Ausführungsform.

### Ausführungsbeispiele:

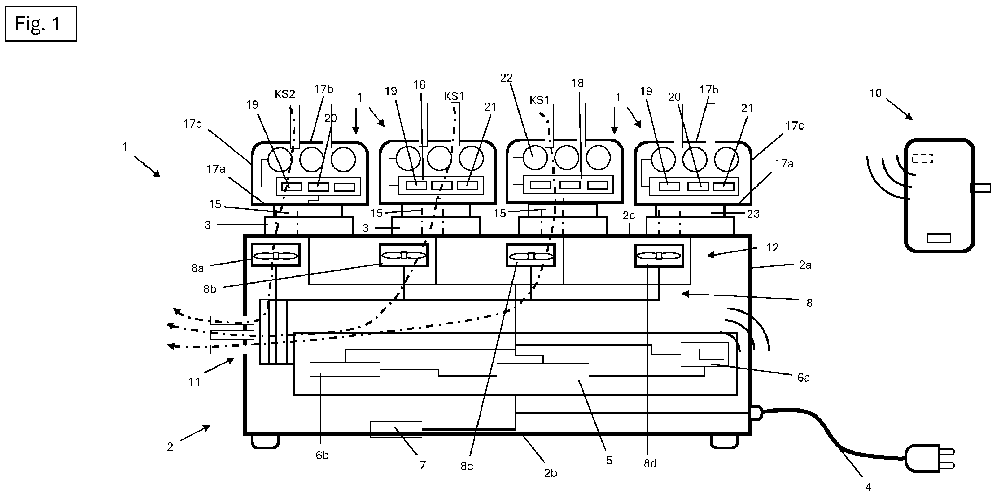

Figur 1 zeigt eine Schnittansicht durch eine erfindungsgemäße Ladevorrichtung 1 gemäß einer beispielhaften Ausführungsform.

Die Ladevorrichtung 1 enthält im Wesentlichen ein Gehäuse 2, eine Vielzahl von Schnittstellen 3, eine Energieversorgung 4, eine Steuerungseinheit 5, eine Kommunikationseinheit 6a, eine Speichereinheit 6b, einen Temperatursensor 7 und eine Kühleinrichtung 8.

Das Gehäuse 2 weist vier Seitenwände 2a, einen Boden 2b und einen Deckel 2c auf. An dem Deckel 2c sind gemäß dem vorliegenden Ausführungsbeispiel vier Schnittstellen 3 positioniert. Alternativ können auch mehr oder weniger als vier Schnittstellen 3 vorhanden sein.

Eine Schnittstelle 3 dient zum wiederlösbaren Verbinden eines Akkumulators 9 mit der Ladevorrichtung 1. Wenn ein Akkumulator 9 mit der Ladevorrichtung 1 verbunden ist, kann der Akkumulator 9 mit elektrischer Energie versorgt werden. Darüber hinaus können unterschiedliche Daten und Informationen zwischen dem Akkumulator 9 und der Ladevorrichtung 1 ausgetauscht werden.

Die Energieversorgung 4 dient zum Versorgen der Ladevorrichtung 1 mit elektrischer Energie. In dem vorliegenden Ausführungsbeispiel ist die Energieversorgung 4 in Form eines Stromkabels ausgestaltet und an einer Seitenwand 2a positioniert. Die als Stromkabel ausgestaltete Energieversorgung 4 kann mit einer Netzstromquelle (= Steckdose) wiederlösbar verbunden werden. Die Netzstromquelle ist in den Figuren nicht gezeigt.

Wie in Figur 1 gezeigt, ist die Steuerungseinheit, die Kommunikationseinheit, die Speichereinheit und die Kühleinrichtung im Inneren des Gehäuses der Ladevorrichtung positioniert. Die Steuerungseinheit, die Kommunikationseinheit, die Speichereinheit und die Kühleinrichtung stehen miteinander so in Kontakt, dass Daten und Informationen untereinander ausgetauscht werden können.

Die Steuerungseinheit 5 dient zum Steuern und Regeln der verschiedenen Funktionen der Ladevorrichtung 1. Zu den Funktionen gehört unter anderem die Steuerung der elektrischen Energie und insbesondere die Menge an elektrischer Energie (d.h. Stromspannung und Stromstärke), die über die Energieversorgung zu der Ladevorrichtung 1 sowie die über jede Schnittstelle 3 an die jeweiligen Akkumulatoren gelangt.

Die Kommunikationseinheit 6a dient zum Senden und Empfangen von Daten und Informationen in Form von Signalen. In dem vorliegenden Ausführungsbeispiel ist die Kommunikationseinheit 6a sowohl mit einer drahtgebundenen als auch mit einer drahtlosen Einheit ausgeführt. Die drahtgebundene Einheit dient unter anderem zur Kommunikation mit den einzelnen Schnittstellen 3 bzw. mit den einzelnen Akkumulatoren 9, die mit den Schnittstellen 3 verbunden sein können. Die drahtlose Einheit dient zum Kommunizieren mit einer externen Vorrichtung 10. In dem vorliegenden Ausführungsbeispiel ist die externe Vorrichtung 10 in Form eines Smartphones ausgestaltet.

Gemäß einer alternativen Ausführungsform kann die drahtlose Einheit der Kommunikationseinheit 6a auch zum Kommunizieren mit einem Akkumulator 9 dienen, wenn ein Akkumulator 9 eine entsprechende Kommunikationseinheit enthält.

Die Speichereinheit 6b dient zum Aufnehmen, Speichern und erneuten Abgeben von Daten und Informationen. Die Daten und Informationen können in Form von Look-Up-Tabellen in der Speichereinheit 6b hinterlegt sein. Darüber hinaus können in der Speichereinheit 6b auch Algorithmen und dergleichen gespeichert sein.

Die Temperatursensor 7 der Ladevorrichtung 1 dient zum Erfassen von Umgebungstemperaturwerten und ist mit der Steuerungseinheit 5 so verbunden, dass die von dem Temperatursensor 7 erfassten Werte an die Steuerungseinheit 5 gesendet werden können. Bei den Umgebungstemperaturwerten handelt es sich um die Temperaturwerte der unmittelbaren Umgebung der Ladevorrichtung 1. Mit anderen Worten: der Temperatursensor 7 kann die Temperatur der Umgebungsluft der Ladevorrichtung 1 erfassen. Der jeweilige Umgebungstemperaturwert hat einen gewissen Einfluss auf die Kühlleistung bzw. den Kühlprozess eines mit der Ladevorrichtung 1 verbundenen Akkumulators 9. Je höher der Umgebungstemperaturwert, desto geringer die tatsächliche Kühlleistung bzw. Kühleffekt an einem Akkumulator 9 und desto länger dauert der Kühlprozess.

Des Weiteren kann die Ladevorrichtung 1 auch einen oder mehrere Anemometer oder Windmesser enthalten. Mit Hilfe des Anemometers ist die Ladevorrichtung 1 in der Lage die Windgeschwindigkeit der Umgebungsluft der Ladevorrichtung 1 zu erfassen. Das Anemometer ist so mit der Steuerungseinheit 5 verbunden, dass die von dem Anemometer erfassten Werte an die Steuerungseinheit 5 gesendet werden können. Der jeweilige Windgeschwindigkeitswert hat einen gewissen Einfluss auf die Kühlleistung bzw. den Kühlprozess eines mit der Ladevorrichtung 1 verbundenen Akkumulators 9.

Ein Anemometer oder Windmesser ist in den Figuren nicht gezeigt.

Darüber hinaus kann die Ladevorrichtung 1 auch einen oder mehrere Photodetektor enthalten. Als Photodetektor, auch Lichtsensor oder optischer Detektor, optoelektronischer Sensor, werden elektronische Bauelemente bezeichnet, die Licht unter Benutzung des photoelektrischen Effekts in ein elektrisches Signal umwandeln oder einen von der einfallenden Strahlung abhängigen elektrischen Widerstand zeigen.

Mit Hilfe des Photodetektors ist die Ladevorrichtung 1 in der Lage die Menge bzw. Intensität des Lichts zu erfassen, welches auf die Ladevorrichtung 1 einfällt. Der Photodetektor ist so mit der Steuerungseinheit 5 verbunden, dass die von dem Photodetektor erfassten Werte an die Steuerungseinheit 5 gesendet werden können. Die Menge bzw. Intensität des einfallenden Lichtes hat einen gewissen Einfluss auf die Kühlleistung bzw. den Kühleffekt eines mit der Ladevorrichtung 1 verbundenen Akkumulators 9.

Ein Photodetektor ist in den Figuren nicht gezeigt.

Die Kühleinrichtung 8 dient zum Kühlen der mit der Ladevorrichtung 1 verbundenen Akkumulatoren 9. In dem vorliegenden ersten Ausführungsbeispiel enthält die Kühleinrichtung 8 vier Lüftereinheiten 8a, 8b, 8c, 8d, vgl. Figur 1. Eine Lüftereinheit 8a, 8b, 8c, 8d ist jeweils so zu einer Schnittstelle 3 der Ladevorrichtung 1 positioniert, dass ein Luftstrom KS1, KS2, KS3 zum Kühlen durch einen Akkumulator 9 strömen kann. Die Ladevorrichtung 1 enthält hierzu Lüftungsöffnungen 11 an den Seitenwänden 2a des Gehäuses 2. Jede Lüftereinheit 8a, 8b, 8c, 8d ist so mit der Steuerungseinheit 5 verbunden, dass die Steuerungseinheit 5 die Kühlleistung einer Lüftereinheit 8a, 8b, 8c, 8d steuern bzw. regeln kann. Es ist dabei insbesondere möglich, dass mit Hilfe der Steuerungseinheit 5 einzelne Lüftereinheiten 8a, 8b, 8c, 8d vollständig abgeschaltet werden können.

Gemäß einer alternativen Ausführungsform enthält die Kühleinrichtung 8 mehr oder weniger als vier Lüftereinheiten 8a, 8b, 8c, 8d.

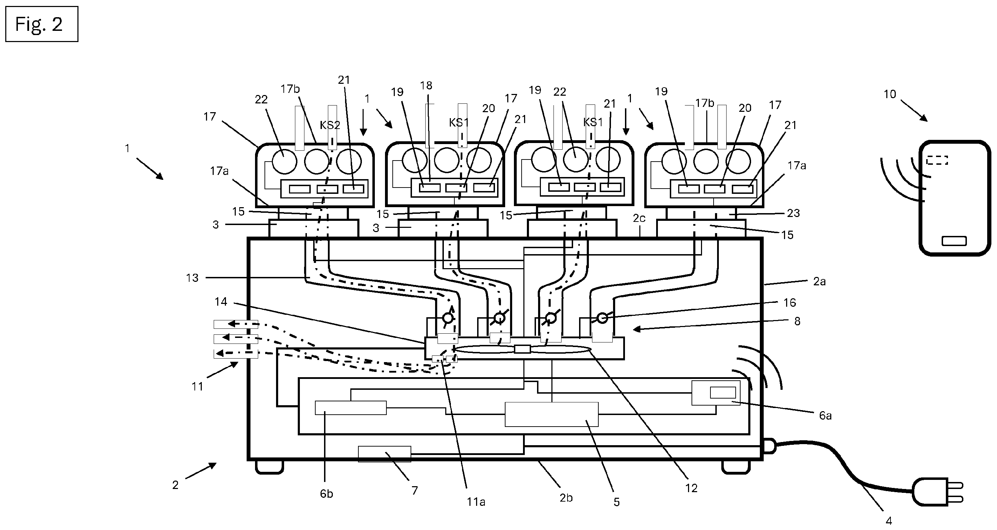

In Figur 2 ist die Ladevorrichtung 1 mit einer Kühleinrichtung 8 gemäß einer zweiten beispielhaften Ausführungsform gezeigt. Die Kühleinrichtung 8 enthält dabei eine einzige Lüftereinheit 12 sowie vier Kühlleitungen 13. Die Kühleinheit 12 ist in einem Gehäuse 14 positioniert. Das Gehäuse 14 weist eine Anzahl an Lüftungsöffnungen 11a auf, sodass Luft mit Hilfe der Lüftereinheit 12 in das Gehäuse 14 der Kühleinrichtung 8 strömen kann. An einer anderen Seite des Gehäuses 14 der Kühleinrichtung 8 sind die jeweiligen ersten Ende der vier Kühlleitungen 13 angeordnet. Die jeweiligen zweiten Enden der vier Kühlleitungen 13 enden an den jeweiligen Schnittstellen 3 für die Akkumulatoren 9. Die Schnittstellen 3 sowie die Akkumulatoren 9 weisen entsprechende Durchgangsöffnungen 15 auf, sodass Luft in Form von Kühlströmen KS1, KS2, KS3 zum Kühlen durch die Schnittstellen 3 und die Akkumulatoren 9 strömen kann.

Wie in Figur 2 angedeutet, sind in den einzelnen Kühlleitungen 13 jeweils ein Stellventil 16 positioniert. Die Stellventile 16 sind so mit der Steuerungseinheit 5 verbunden, dass die Steuerungseinheit 5 die Stellventile 16 einstellen kann. Mit Hilfe eines Stellventils 16 kann die Menge an Kühlluft eingestellt werden, die durch die Kühlleitung 13 strömt.

Des Weiteren kann mit Hilfe der Stellventile 16 auch eingestellt werden, welche Schnittstellen 3 bzw. welche Akkumulatoren 9 überhaupt mit einem Kühlstrom KS1, KS2, KS3 versorgt werden. So ist es beispielsweise möglich, dass lediglich ein einziges Stellventil 16 geöffnet und drei Stellventile 16 vollständig geschlossen sind. Der gesamte von der einzigen Lüftereinheit 12 erzeugte Kühlstrom KS1, KS2, KS3 wird bei dieser Ventilstellung auf eine Schnittstelle 3 bzw. auf einen Akkumulator 9 gerichtet. Die Kühlleistung an dieser Schnittstelle 3 bzw. an diesem Akkumulator 9 ist damit größtmöglich.

Die Menge an Kühlluft hat einen gewissen Einfluss auf die Kühlleistung bzw. den Kühlprozess eines mit der Ladevorrichtung 1 verbundenen Akkumulators 9.

Wie bereits vorstehend erwähnt, können Akkumulatoren 9 zum Laden mit der Ladevorrichtung 1 wiederlösbar verbunden werden.

Der Akkumulator 9 kann als Energiequelle wiederlösbar mit einer elektrischen Werkzeugmaschine verwendet werden. Bei der Werkzeugmaschine kann es sich um einen Bohrhammer, Akku-Schrauber, eine Säge, ein Schleifgerät oder dergleichen handeln. Die Werkzeugmaschine ist in den Figuren nicht dargestellt.

Der Akkumulator 9 enthält im Wesentlichen ein Akkugehäuse 17, eine Steuereinheit 18, einen Temperatursensor 19, eine Speichereinheit 20, eine Einrichtung 21 zum Ermitteln eines Ladezustands und eine Anzahl an Energiespeicherzellen 22.

Das Akkugehäuse 17 weist eine Oberseite 17a, eine Unterseite 17b sowie vier Seitenwände 17c auf. An der Oberseite 17a des Akkugehäuses 17 ist eine Akkuschnittstelle 23 positioniert.

Mit Hilfe der Akkuschnittstelle 23 kann der Akkumulator 9 wiederlösbar mit einer Werkzeugmaschine verbunden werden. Die Werkzeugmaschine ist in den Figuren nicht gezeigt. Des Weiteren kann mit Hilfe der Akkuschnittstelle 23 der Akkumulator 9 wiederlösbar mit der Ladevorrichtung 1 verbunden werden.

Die Steuereinheit 18 dient zum Steuern und Regeln der unterschiedlichen Funktionen des Akkumulators 9. Des Weiteren ist die Steuereinheit 18 mit der Akkuschnittstelle 23 so verbunden, dass elektrische Energie von der Steuereinheit 18 zu der Akkuschnittstelle 23 oder von der Akkuschnittstelle 23 zu der Steuereinheit 18 geleitet werden kann.

Die Energiespeicherzellen 22 können auch als Akku-Zellen, Batteriezellen, Sekundärzelle oder Energiezellen bezeichnet werden und sind im Inneren des Akkugehäuses 17 angeordnet.

Die Energiespeicherzellen 22 dienen zum Aufnehmen, Speichern und erneuten Abgeben elektrischer Energie. Die Energiespeicherzellen 22 sind in zylindrischer Form sowie auf Basis einer Lithium-Ionen-Technologie ausgestaltet. Jede Energiespeicherzelle 22 enthält an einem ersten Ende einen ersten Polkontakt und an einem zweiten Ende einen zweiten Polkontakt. Der erste Polkontakt kann als Pluspol und der zweite Polkontakt kann als Minuspol bezeichnet werden Die Polkontakte dienen zum Schließen eines Stromkreises und zur Übertragung elektrischer Energie von oder zu den Energiespeicherzelle 22.

Alternativ können die Energiespeicherzellen 22 auch auf einer anderen geeigneten Technologie als Lithium-Ionen basieren. Es ist zudem auch möglich, dass unterschiedliche Technologien in einem einzigen Akkumulator 9 für die Energiespeicherzellen 22 zum Einsatz kommen.

Des Weiteren weist ein Akkumulator 9 einen Kommunikationskontakt sowie einen Transceiver auf. Mit Hilfe des Transceivers können Daten und Informationen empfangen und gesendet werden.

Der Kommunikationskontakt ist Bestandteil der Akkuschnittstelle 23. Die Schnittstelle 3 der Ladevorrichtung 1 weist einen zu dem Kommunikationskontakt des Akkumulators 9 korrespondierenden Kommunikationskontakt auf. Wenn ein Akkumulator 9 mit der Ladevorrichtung 1 über die entsprechenden Schnittstellen 3 verbunden ist, stehen die jeweiligen Kommunikationskontakte so miteinander in Verbindung, dass Daten und Informationen zwischen der Akkumulator 9 und der Ladevorrichtung 1 ausgetauscht werden können.

Gemäß einer alternativen Ausführungsform kann die Kommunikation bzw. der Daten- und Informationsaustausch auch per Funkverbindung (z.B. Bluetooth oder dergleichen) erfolgen.

Ein Temperatursensor 19 dient zum Erfassen von Temperaturwerten in regelmäßigen Zeitabständen im Inneren eines Akkumulators 9. Die Temperaturerfassung kann jedoch auch in unregelmäßigen Zeitabständen erfolgen. Die Steuereinheit 18 und der Temperatursensor 19 so miteinander verbunden, dass von dem Temperatursensor 19 erfasste Temperaturwerte an die Steuereinheit 18 gesendet werden können.

Die Steuereinheit 18 eines Akkumulators 9 und die Steuerungseinheit 5 der Ladevorrichtung 1 stehen über die Schnittstellen so in Verbindung, dass unter anderem die von dem Temperatursensor 19 erfassten Temperaturwerte an die Steuerungseinheit 5 gesendet werden können.

Die Einrichtung 21 zum Ermitteln eines Ladezustands dient zum Erfassen des Ladezustand der Energiespeicherzellen 22. Der Ladezustand kann auch als State-of-Charge (= SoC) bezeichnet werden. Die Einrichtung 21 zum Ermitteln eines Ladezustands ist so ausgestaltet, dass in regelmäßigen zeitlichen Abständen der Ladezustand des Akkumulators 9 erfasst wird. Die erfassten Ladezustandswerte werden in der Speichereinheit 20 gespeichert und/oder an die Steuereinheit 18 gesendet. Die zeitlichen Abstände zum Erfassen der Ladungswerte kann jedoch auch unregelmäßig sein. Darüber hinaus kann bei besonderen Ereignissen, wie beispielsweise bei einem ungewöhnlich schnellen Temperaturanstieg, in verkürzten Zeitabständen der Ladungswert erfasst werden.

Zur Durchführung des erfindungsgemäßen Verfahrens werden zunächst die Akkumulatoren 9 mit der Ladevorrichtung 1 verbunden, sodass jeweils eine Schnittstelle 3 der Ladevorrichtung 1 mit einer Akkuschnittstelle 23 eines Akkumulators 9 in Kontakt steht. Durch die Verbindung eines Akkumulators 9 mit der Ladevorrichtung 1 kann zum einen elektrische Energie von der Ladevorrichtung 1 zu den Energiespeicherzellen 22 eines Akkumulators 9 gelangen. Zum anderen können Daten und Informationen in Form von Signalen zwischen einem Akkumulator 9 und der Ladevorrichtung ausgetauscht werden.

Sobald ein Akkumulator mit der Ladevorrichtung 1 verbunden ist, wird der zuletzt erfasste Temperaturwert sowie der zuletzt erfasste Ladezustandswert über die entsprechenden Schnittstellen 3 an die Steuerungseinheit 5 der Ladevorrichtung 1 gesendet.

Die Steuerungseinheit 5 der Ladevorrichtung 1 ermittelt jeweils die Zeitdauer für ein Laden eines Akkumulators 9 von einem ersten Ladezustand zu einem zweiten (d.h. höheren) Ladezustand bei einer jeweiligen maximalen Ladeleistung.

Bei der jeweiligen maximalen Ladeleistung handelt es sich beispielsweise um eine gesamte Ladeleistung (d.h. 100% an Ladeleistung), die die Ladevorrichtung 1 lediglich an einer einzigen Schnittstelle zum Laden eines Akkumulators 9 bereitstellt. In diesem Fall, ist entweder nur ein einziger Akkumulator 9 mit der Ladevorrichtung 1 verbunden oder es sind mehrere Akkumulatoren 9 mit der Ladevorrichtung 1 verbunden, wobei jedoch lediglich ein einziger Akkumulator 9 mit 100% der zur Verfügung stehenden Ladeleitung der Ladevorrichtung 1 geladen wird.

Bei der jeweiligen maximalen Ladeleistung kann es sich jedoch auch um einen Anteil der gesamten Ladeleistung (d.h. 100% der Ladeleistung) handeln. Für den Fall, dass die Ladevorrichtung 1 vier Schnittstellen 3 enthält, beträgt die maximale Ladeleistung an jeder Schnittstelle 3 der Ladevorrichtung 1 beispielsweise ein Viertel der gesamten Ladeleistung (d.h. 25% der Ladeleistung).

Bei dem ersten Ladezustand handelt es sich um den Ladezustand, der von dem Akkumulator 9 nach Verbinden mit der Ladevorrichtung 1 gesendet wurde. Der erste Ladezustand beträgt beispielsweise einer Kapazität von 20%. Der zweite Ladezustand kann auch als Endladezustand oder Zielladezustand bezeichnet werden und beträgt beispielsweise 80%. Die Ermittlung der Zeitdauer erfolgt durch einen Abgleich mit den Daten und Informationen, die in der Speichereinheit 6b der Ladevorrichtung 1 hinterlegt sind. Bei den Daten und Informationen, die in der Speichereinheit 6b der Ladevorrichtung 1 hinterlegt sind, kann es sich insbesondere um Schwellwerte oder Algorithmen handeln.

Diese hinterlegten Daten und Informationen können nach Verbinden eines Akkumulators 9 an die Ladevorrichtung 1 gesendet und in der Speichereinheit 6b der Ladevorrichtung 1 gespeichert werden. Gemäß eines weiteren alternativen Ausführungsbeispiels können die Daten und Informationen bzgl. der Zeitdauer zum Laden von einem ersten zu einem weiteren Ladezustand eines Akkumulators 9 auch mit Hilfe einer drahtgebundenen oder drahtlosen Kommunikationsverbindung von einem externen Vorrichtung 10 zu der Ladevorrichtung 1 gelangen. Bei der externen Vorrichtung 10 kann es sich neben einem Smartphone auch um einen Computer, einem Cloud-Datenspeicher oder dergleichen handeln.

Alternativ können die Daten und Informationen bzgl. der Zeitdauer zum Laden von einem ersten zu einem weiteren Ladezustand bei einer jeweiligen maximalen Ladeleistung auch in der Speichereinheit 6b eines Akkumulators 1 hinterlegt sein. In der Speichereinheit 6b eines Akkumulators 9 können für mehrere unterschiedliche Ladevorrichtungen 1 und dementsprechend unterschiedliche maximale Ladeleistungen die entsprechenden Zeitdauern hinterlegt sein. Dadurch, dass ein Akkumulator 9 nach Verbinden mit einer Ladevorrichtung 1 die Kennung bzw. Kennwerte der vorliegenden Ladevorrichtung 1 übermittelt bekommt, kann der Akkumulator 9 die entsprechenden Zeitdauern an die Ladevorrichtung 1 senden.

Des Weiteren ermittelt die Steuerungseinheit 5 der Ladevorrichtung 1 die Zeitdauer für das Kühlen eines Akkumulators 9 von einem ersten Temperaturwert zu einem zweiten (d.h. niedrigeren) Temperaturwert bei einer jeweiligen maximalen Kühlleistung der Kühleinrichtung 8.

Bei der jeweiligen maximalen Kühlleistung handelt es sich beispielsweise um eine gesamte Kühlleistung (d.h. 100% an Kühlleistung), die die Kühleinrichtung 8 lediglich an einem einzigen Akkumulator 9 bereitstellt. In diesem Fall, ist entweder nur ein einziger Akkumulator 9 mit der Ladevorrichtung 1 verbunden oder es sind mehrere Akkumulatoren 9 mit der Ladevorrichtung 1 verbunden, wobei jedoch lediglich ein einziger Akkumulator 9 mit 100% der zur Verfügung stehenden Kühlleistung der Kühleinrichtung 8 gekühlt wird.

Bei der jeweiligen maximalen Kühlleistung kann es sich jedoch auch um einen Anteil der gesamten Kühlleistung (d.h. 100% der Kühlleistung) handeln. Für den Fall, dass die Ladevorrichtung 1 vier Schnittstellen 3 enthält, beträgt die maximale Kühlleistung an jeder Schnittstelle 3 der Ladevorrichtung 1 beispielsweise ein Viertel der gesamten Kühlleistung (d.h. 25% der Kühlleistung).

Bei dem ersten Temperaturwert handelt es sich um den Temperaturwert, der zuletzt von dem Temperatursensor 19 eines Akkumulators 9 erfasst und nach Verbinden mit der Ladevorrichtung 1 von dem Akkumulator 9 gesendet wurde. Der erste Temperaturwert beträgt beispielsweise 60°C. Der zweite Temperaturwert kann auch als Endtemperaturwert oder Zieltemperaturwert bezeichnet werden und beträgt beispielsweise 20°C. Die Ermittlung der Zeitdauer erfolgt durch einen Abgleich mit den Daten und Informationen, die in der Speichereinheit 6b der Ladevorrichtung 1 hinterlegt sind.

Alternativ können die Daten und Informationen bzgl. der Zeitdauer zum Kühlen von einem ersten zu einem weiteren Temperaturwert auch in der Speichereinheit 6b eines Akkumulators 9 hinterlegt sein.

Diese hinterlegten Daten und Informationen können nach Verbinden eines Akkumulators 9 an die Ladevorrichtung 1 gesendet und in der Speichereinheit 6b der Ladevorrichtung 1 gespeichert werden. Gemäß eines weiteren alternativen Ausführungsbeispiels können die Daten und Informationen bzgl. der Zeitdauer zum Kühlen von einem ersten zu einem weiteren Temperaturwert eines Akkumulators 9 auch mit Hilfe einer drahtgebundenen oder drahtlosen Kommunikationsverbindung von einem externen Vorrichtung 10 zu der Ladevorrichtung 1 gelangen. Bei der externen Vorrichtung 10 kann es sich neben einem Smartphone auch um einen Computer, einem Cloud-Datenspeicher oder dergleichen handeln.

Alternativ können die Daten und Informationen bzgl. der Zeitdauer zum Kühlen von einem ersten zu einem weiteren Temperaturwert bei einer jeweiligen maximalen Kühlleistung auch in der Speichereinheit 6b eines Akkumulators 9 hinterlegt sein. In der Speichereinheit 6b eines Akkumulators können für mehrere unterschiedliche Ladevorrichtungen 1 und dementsprechend unterschiedliche maximale Kühlleistungen die entsprechenden Zeitdauern hinterlegt sein. Dadurch, dass ein Akkumulator 9 nach Verbinden mit einer Ladevorrichtung 1 die Kennung bzw. Kennwerte der vorliegenden Ladevorrichtung 1 übermittelt bekommt, kann der Akkumulator 9 die entsprechenden Zeitdauern an die Ladevorrichtung 1 senden.

Die Steuerungseinheit 5 der Ladevorrichtung 1 vergleicht die Zeitdauer für ein Laden eines ersten Akkumulators 9 von einem ersten Ladezustand zu einem zweiten (d.h. höheren) Ladezustand bei einer jeweiligen maximalen Ladeleistung mit der Zeitdauer für das Kühlen des ersten Akkumulators 9 von einem ersten Temperaturwert zu einem zweiten (d.h. niedrigeren) Temperaturwert bei einer jeweiligen maximalen Kühlleistung der Kühleinrichtung 8.

Des Weiteren vergleicht die Steuerungseinheit 5 der Ladevorrichtung 1 die Zeitdauer für ein Laden eines zweiten Akkumulators 9 von einem ersten Ladezustand zu einem zweiten (d.h. höheren) Ladezustand bei einer jeweiligen maximalen Ladeleistung mit der Zeitdauer für das Kühlen des zweiten Akkumulators 9 von einem ersten Temperaturwert zu einem zweiten (d.h. niedrigeren) Temperaturwert bei einer jeweiligen maximalen Kühlleistung der Kühleinrichtung 8.

Wenn die Steuerungseinheit der Ladevorrichtung 1 ermittelt, dass die Zeitdauer für ein Laden eines ersten Akkumulators 9 von einem ersten Ladezustand zu einem zweiten (d.h. höheren) Ladezustand bei einer jeweiligen maximalen Ladeleistung größer bzw. länger ist als die Zeitdauer für das Kühlen des ersten Akkumulators 9 von einem ersten Temperaturwert zu einem zweiten (d.h. niedrigeren) Temperaturwert bei einer jeweiligen maximalen Kühlleistung der Kühleinrichtung 8, wird der erste Akkumulator 9 mit einer ersten Ladeleistung geladen und mit einer ersten Kühlleistung gekühlt.

Wenn die Steuerungseinheit 5 der Ladevorrichtung 1 ermittelt, dass die Zeitdauer für ein Laden eines zweiten Akkumulators 9 von einem ersten Ladezustand zu einem zweiten (d.h. höheren) Ladezustand bei einer jeweiligen maximalen Ladeleistung kleiner bzw. kürzer ist als die Zeitdauer für das Kühlen des zweiten Akkumulators 9 von einem ersten Temperaturwert zu einem zweiten (d.h. niedrigeren) Temperaturwert bei einer jeweiligen maximalen Kühlleistung der Kühleinrichtung 8, wird der zweite Akkumulator 9 mit einer zweiten Ladeleistung geladen und mit einer zweiten Kühlleistung gekühlt.

Die erste Ladeleistung ist dabei größer als die zweite Ladeleistung und die erste Kühlleistung ist größer als die zweite Kühlleistung.

### Bezugszeichen

- 1: Ladevorrichtung
- 2: Gehäuse
- 2a: Seitenwand
- 2b: Boden
- 2c: Deckel
- 3: Schnittstelle
- 4: Energieversorgung
- 5: Steuerungseinheit
- 6a: Kommunikationseinheit
- 6b: Speichereinheit
- 7: Temperatursensor
- 8: Kühleinrichtung
- 8a-d: Kühleinheit
- 9: Akkumulator
- 10: externe Vorrichtung
- 11: Lüftungsöffnung des Gehäuses der Ladevorrichtung
- 11a: Lüftungsöffnung des Gehäuses der Kühleinrichtung
- 12: Lüftereinheit
- 13: Kühlleitung
- 14: Gehäuse der Kühleinheit
- 15: Durchgangsöffnung
- 16: Stellventil
- 17: Akkugehäuse
- 17a: Oberseite des Akkugehäuses
- 17b: Unterseite des Akkugehäuses
- 17c: Seitenwände des Akkugehäuses
- 18: Steuereinheit
- 19: Temperatursensor
- 20: Speichereinheit
- 21: Einrichtung zum Ermitteln eines Ladezustands
- 22: Energiespeicherzelle
- 23: Akkuschnittstelle

- KS1, 2, 3: Kühlstrom

## Patentansprüche

1. Verfahren zum Laden wenigstens eines ersten und zweiten Akkumulators (9), insbesondere als Energiespeichereinheit für eine Werkzeugmaschine, durch eine Ladevorrichtung (1) enthaltend eine Steuerungseinheit (5), eine Kommunikationseinheit (6a) zum Empfangen von Signalen von dem ersten und zweiten Akkumulator (9), eine Speichereinheit (6b) und eine Kühleinrichtung (8) zum wahlweisen Kühlen des wenigstens ersten und/oder zweiten Akkumulators (9) mit variablen Kühlleistungen, wobei jeder Akkumulator (9) wenigstens einen Temperatursensor (7) zum Erfassen von Temperaturwerten sowie wenigstens eine Einrichtung (21) zum Ermitteln von Ladungswerten enthält,
**gekennzeichnet durch** die Verfahrensschritte:
- Verbinden des wenigstens ersten und zweiten Akkumulators (9) mit der Ladevorrichtung (1);
- Senden eines ersten Ladungswertes und eines ersten Temperaturwertes von dem wenigstens ersten Akkumulator (9) an die Ladevorrichtung (1);
- Senden eines zweiten Ladungswertes und eines zweiten Temperaturwertes von dem wenigstens zweiten Akkumulator (9) an die Ladevorrichtung (1); und
- Kühlen des ersten Akkumulators (9) mit einer ersten Kühlleistung und/oder Laden des zweiten Akkumulators (9) mit einer ersten Ladeleistung, wenn der erste Temperaturwert höher ist als der zweite Temperaturwert.

2. Verfahren nach Anspruch 1,
**gekennzeichnet durch** die Verfahrensschritte
- Laden des ersten Akkumulators (9) mit einer zweiten Ladeleistung, wenn wenigstens ein zweiter von dem ersten Akkumulator (9) an die Ladevorrichtung (1) gesendeter Temperaturwert einem vorbestimmten Schwellwert entspricht, wobei die zweite Ladeleistung geringer ist als die erste Ladeleistung.

3. Verfahren nach Anspruch 1 oder 2,
**gekennzeichnet durch** die Verfahrensschritte
- Kühlen des zweiten Akkumulators (9) mit einer zweiten Kühlleistung, wenn wenigstens ein zweiter von dem zweiten Akkumulator (9) an die Ladevorrichtung (1) gesendeter Ladungswert einem vorbestimmten Schwellwert entspricht, wobei die zweite Kühlleistung geringer ist als die erste Kühlleistung.

4. Verfahren nach wenigstens einem der vorstehenden Ansprüche,
**gekennzeichnet durch** die Verfahrensschritte
- Kühlen des ersten Akkumulators (9) mit einer ersten Kühlleistung und/oder Laden des zweiten Akkumulators (9) mit einer ersten Ladeleistung, wenn der erste Temperaturwert wenigstens einen vorbestimmten Wert höher ist als der zweite Temperaturwert.

5. Verfahren nach wenigstens einem der vorstehenden Ansprüche,
**dadurch gekennzeichnet, dass** die erste Kühlleistung einem Faktor der zweiten Kühlleistung und/oder die erste Ladeleistung einem Faktor der zweiten Ladeleistung entspricht.
